# NEW EUROPEAN PATENT SPECIFICATION

(11) **EP 0 342 286 B2**
(45) Date of publication and mention of the opposition decision: **19.06.2002**
(45) Mention of the grant of the patent: 23.03.1994
(21) Application number: 88304575.9
(22) Date of filing: 20.05.1988
(51) Int. Cl.: B41N 10/04

(54) **Method of curing a compressible printing blanket and a compressible printing blanket produced thereby**
Verfahren zum Vulkanisieren eines kompressiblen Drucktuches und ein kompressibles Drucktuch
Méthode de vulcanisation d'un blanchet d'impression compressible et blanchet d'impression compressible

(43) Date of publication of application: 23.11.1989
(73) Proprietor: DAY INTERNATIONAL INC., Cleveland, Ohio 44114-1824 (US)
(72) Inventor: Gaworowski, Andrew J., Asheville North Carolina 28804 (US); Tell, Mayo B., Asheville North Carolina 28806 (US)
(74) Representative: Bankes, Stephen Charles Digby

(56) References cited:
- AU-A- 4 930 472
- DE-A- 2 257 962
- FR-A- 2 095 534
- FR-A- 2 163 041
- FR-A- 2 198 843
- GB-A- 1 327 758
- US-A- 3 524 753
- US-A- 3 856 721
- US-A- 4 042 743
- PATENT ABSTRACTS OF JAPAN, vol. 10, no. 176 (M-491)[2232], 20th June 1986; JP-A-61 27 295
- The Fundamentals of Rupper Technology, 1947,pages 122-125 and 135
- The ICI Latex Manual Part 1, Section 4, page 3
- The Vanderbilt Rubber Handbook, 1948, pages 128,129 and 358-361
- The Vanderbilt Rubber Handbook, 1968, pages 107,108 and 256-263
- The Vanderbilt Rubber Handbook, 1978, page 361
- Manual for the Rubber Industry, Bayer, May 1972, pp 68-9
- Vanderbilt Rubber Handbook,1978, pages 727-729
- Rubber Natural and Synthetic, H.J. Stern,.1967, pages 431-432
- Merck Index 9th Ed. 1976, page 1225
- ASTM Standard D2084-93
- The Vanderbilt Rubber Handbook, 12th Ed. 1978, pages 797-801
- Mechanics of Cellular Plastic, Ed.N.C. Hilyard, 1982, pages 359 and360
- Bayer Vulkacit Accelerators data sheet of February 1983
- Rubber Technology and Manufacture - C.M. Blow, 1971, p.471-477
- "New developments in offset blankets" (dated 9.11.78) N. Chamberlain, Professional Printer, Vol. 22, number 6, pages 2-7

## Description

This invention relates to a method of curing printing blankets and printing blankets produced thereby, and in particular relates to a compressible printing blanket of the type used in offset lithographic printing.

The use of blankets in offset lithography is well known and has a primary function of transferring ink from a printing plate to paper. Printing blankets are very carefully designed so that the surface of the blanket is not damaged either by the mechanical contact of the blanket with the parts of the press or by chemical reaction with the ink ingredients. Repeated mechanical contacts cause a certain amount of compression of the blanket which must be within acceptable limits so that the image is properly reproduced. It is also important that the blanket have resiliency, i.e. be capable of eventually returning to its original thickness, and that it provide constant image transfer regardless of the amount of use of which it is put.

Printing blankets are normally composed of a substrate base material which will give the blanket integrity. Woven fabrics are preferred for this base. The base may consist of one, two, three, or more layers of fabric. The working surface, by which is meant the surface that actually contacts the ink, is usually a layer of elastomeric material such as rubber. The blanket is conventionally made by calendaring or spreading rubber in layers until a desired thickness of rubber has been deposited, after which the assembly is cured or vulcanized to provide the finished blanket. Such a blanket is acceptable for many applications, but often lacks the necessary compressibility and resiliency needed for other applications. It is desirable, therefore, to produce more highly compressible blankets with improved resiliency.

It is difficult to obtain an improved compressibility factory by the standard construction described above because the rubber material, while it is highly elastomeric, is not compressible and cannot be compressed in a direction at right angles to its surface without causing a distortion or stretch of the blanket in areas adjacent to the point of compression. If irregularities exist in the printing plate, the presses, or the paper, the compression to which the blanket is exposed will vary during the printing operation and the irregularities in the plates, presses, or paper will be magnified by the lack of compression in the printing blanket.

The key to providing a printing blanket having the desired compressibility and resiliency is in providing a compressible layer therein. In particular, it has been found that by including at least one layer of material comprising a compressible layer of resilient polymer in a printing blanket that printing problems such as those described above as well as "blurring" (lack of definition), caused by a small standing wave in the blanket printing surface adjacent to the nip of the printing press, can be avoided. Also, a compressible layer can serve to absorb a "smash", that is a substantial deformation in the blanket caused by a temporary increase in the thickness in the material to be printed, for example, the accidental introduction of more than one sheet of paper during the printing operation. By incorporating a compressible layer in the blanket, a "smash" can be absorbed without permanent damage to the blanket or impairment to the printing quality of the blanket. In addition, a resilient, compressible layer helps to maintain the evenness of the printing surface and the thickness of the blanket during the printing operation by restoring the normal thickness of the blanket after compression at the nip of the press.

Many different means of producing a compressible layer within a printing blanket are known in the art. For example, compressible layers have been formed by mixing granular salt particles with the polymer used to produce the layer, and thereafter leaching the salt from the polymer to create voids. The voids in the layer make possible the positive displacement of the surface layer without distortion of the surface layer since volume compression occurs and displacement takes place substantially perpendicular to the impact of the press. Such a method is disclosed in Haren et al, U.S. Patent 4,025,685. Other methods, such as using compressible fiber structures have been used heretofore to produce compressible layers. Examples are found in Duckett et al, U.S. Patents 3,887,750 and 4,093,764. Rodriguez, U.S. Patent 4,303,721, teaches a compressible blanket made using blowing agents to create voids in the compressible layer. The use of rubber particules to create voids is disclosed in Rhodarmer, U.S. Patent 3,795,568.

The forming of voids using blowing agents has the disadvantages that the size of the voids formed, and the interconnecting of the voids is not easily controlled. Oversized voids and interconnected voids cause some areas of the printing blanket to be more compressible and less resilient than adjacent areas of the printing blanket, which results in deformations during printing. The leaching of salts from a polymer matrix has the disadvantages that the particle sizes used are limited, and that the leaching step is difficult, time consuming and expensive.

More recently, it has been found preferable to produce printing blankets having a compressible layer comprising a cellular resilient polymer having cells or voids in the compressible layer in the form of discrete microcells. It has been found particularly advantageous to produce a compressible layer by incorporating hollow microcapsules in the polymer, as illustrated by Shrimpton et al, U.S. patent No. 3,700,541, and corresponding British patent 1,327,758; and by Larson, U.S. Patent 4,042,743.

FR 2163041 discloses a method of making a laminated printing blanket construction comprising the steps of providing at least one fabric substrate layer, forming an intermediate compressible layer of an elastomeric material on said substrate layer said intermediate compressible layer having a substantially uniform thickness and having microcapsules incorporated therein, said microcapsules being substantially uniformly distributed throughout said intermediate compressible layer, providing a surface layer over said intermediate compressible layer to form a printing blanket constructions, and vulcanizing said construction to cure said layers.

In such prior art methods of producing a compressible layer for a printing blanket employing microcapsules, it has been found that the thickness of the compressible layer formed is not easily controlled since microcapsules most suitable for this use will melt at a temperature lower than the vulcanizing temperature used for vulcanizing the printing blankets. Since the microcapsules melt before the vulcanization is complete, and before the compressible layer achieves a set structure, agglomeration of the voids created by the- microcapsules occurs, and size variations in the voids also occur. This can effect overall performance properties of the blanket. Also, the variations in the sizes of the voids can weaken the printing blanket and cause the printing blanket to wear out prematurely.

It is an object of the present invention to overcome the deficiencies in the prior art printing blankets described above.

In accordance with the present invention, there is provided a method of making a laminated printing blanket construction as defined in claim 1.

In a preferred form, the elastomeric material including the microcapsules is initially fixed by adding an accelerator capable of permitting vulcanization of the elastomeric material at a temperature ranging from 43 to 77 °C (110°F-170°F), over a time period ranging from 1 to 12 hours. These temperature conditions, which are below the melting point of the microcapsules, cause an initial vulcanization of the elastomer compound to form the intermediate layer. Then all of the layers are laminated to create a unitary printing blanket by finally vulcanizing the assembly under controlled heat and pressure. The final product comprises a laminated printing blanket including at least one substrate layer, a surface layer, and a compressible intermediate layer disposed therebetween. The intermediate layer has a closed-cell cellular structure having substantially uniform thickness and substantially evenly distributed voids of substantially uniform size, in which the voids are not interconnected. Additional reinforcing fabric layers may also be incorporated therein.

In order that the invention may be more readily understood, reference will now be made by example to the accompanying drawings in which:
Fg. 1 illustrates a cross section of a printing blanket of the present invention, indicating the relationship of the layers; and

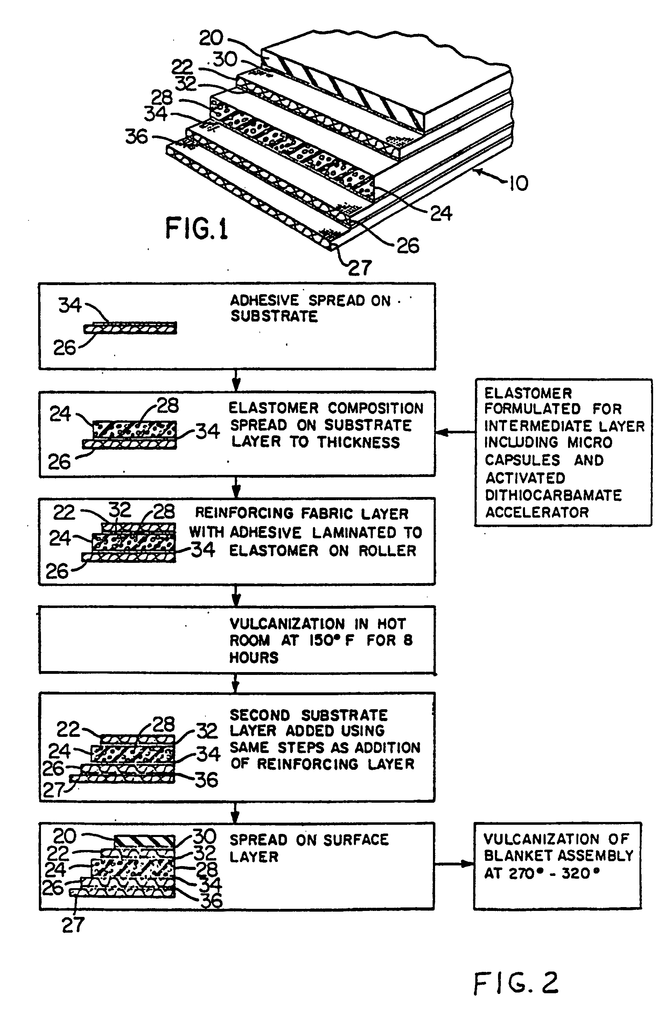

Fig. 2 is a flow diagram, illustrating the steps comprising the method of the present invention.

Reference is now made to Fig. 1 which illustrates a printing blanket made according to the present invention. The printing blanket 10 comprises a surface layer 20, a reinforcing fabric layer 22, a compressible layer 24, and at least one additional layer of fabric as a substrate or base. For purposes of illustration, two substrate fabric layers 26 and 27 are shown in the drawing. Those skilled in the art will recognize that the number and types of layers used can vary depending on the uses intended. Adhesive layers 30, 32, 34 and 36 are preferred to ensure sufficient bonding between the different layers in the blanket. Voids 28 in the compressible layer 24 make possible displacement of the surface layer 20 without distortion thereof under operating conditions. As illustrated in the drawing, the voids 28 in the compressible layer 24 have substantially uniform size and substantially uniform distribution and are not inter-connected. It has been found that the dimensions of the voids 28 produced in the compressible layer 24 are generally in the same range as the dimensions of the microcapsules used to create the voids. In general, the voids will be in the range of 10-125 microns in diameter, and preferably 20-60 microns.

The compressible layer 24 is formed by an elastomeric material having the usual processing, stabilizing, strengthening and curing additives and is formulated with reference to its specific application. As is known in the art, this formulation is different from the one used for the surface layer 20. Any suitable polymeric material which is considered a curable or vulcanizable material can be used; for example, natural rubber, styrene-butadiene rubber (SBR), EPOM (ethylene/propylene/non-conjugated diene ter-polymer rubber), butyl rubber, butadiene, acrylonitrile rubber (NBR), polyurethanes etc. An elastomer which is resistant to solvents and ink is preferable.

The adhesive layers 30, 32, 34 and 36 may be any suitable elastomeric adhesive known in the art. Preferably the adhesive will be a rubber cement. The fabric layers 22, 26 and 27 should be made of plain woven fabric of lower extensibility in the warp direction (in the direction longitudinal to the machining of the blanket), and are typically high grade cotton yarns, which are free from slubs and knots, weaving defects, seeds, etc. The fabric may also be rayon, nylon, polyester, or mixtures thereof. When applying adhesive to any of the fabric layers, it is usually spread with a knife-over-roll-spreader. The adhesive is applied in layers until the desired thickness is obtained. Typically, a fabric layer will be about 0.076 to 0.41 mm (0.003 to 0.016 in.) thick.

The compressible layer 24 is formed by applying the elastomeric compound as described above, containing microcapsules, to the fabric substrate 26, also using a knife-over-roll-spreader. The elastomeric compound is brought to the desired consistency for spreading by adding a solvent. In general, a number of layers of the compound are required to make an intermediate layer 24 of the desired thickness. As each layer is applied, it is solidified, but not crosslinked, due to the evaporation of the solvent. In general, the compressible layer will be about 0.20 to 0.38 mm (0.008 to 0.015 in.) thick. It is preferred that the layer be about 0.28 to 0.30 mm (0.011 to 0.012 in.) thick.

The surface layer 20 is made using the same procedure as is described in the making of the intermediate layer, using an elastomeric compound suitable for the working face of the printing blanket 10. In general, a number of layers of compound are required to make a surface layer 20 of the desired thickness. In general, the surface layer 20 will be about 0.005 to 0.25 in. thick, preferably be about 0.010 to 0.015 in. thick. It is most preferred to provide a surface layer in the range of about 0.30 to 0.38 mm (0.012 to 0.015 in.) thick.

According to the present invention, conventional resinous microcapsules that are known in the art may be used in the intermediate layer. Any microcapsules having the properties described herein will be suitable for use in the present invention. Microcapsules having a melting point of about 74° to 132 °C (165 °F to 270 °F) can be used. Preferably, the microcapsules will melt at about 82° (180°F). Some of the materials suitable for use in the microcapsules are thermoplastic materials such as polyvinylidene chloride. Preferably, the materials used in making the microcapsules will be thermoplastics. Examples of such materials are polyvinylidene chloride, poly methyl methacrylate, polyvinyl chloride, polyacrylonitrile, and copolymers thereof. Preferably, a copolymer of acrylonitrile and vinylidene chloride will be used. Mixtures of different kinds of thermoplastic microcapsules may be used if desired.

In addition, any of the resins having the properties that are described herein that are mentioned in U.S. Patent 2,797,201 may be used. Of course, it is understood that these materials named are illustrative, and the present invention is not limited thereby.

The microcapsules used in the method claimed are approximately spherical in shape and range from 10 to 100 microns in diameter, with an average particle size of about 30-50 microns. These capsules are formed, for example, with a thin, elastic, thermoplastic shell which may be composed of vinylidene chloride/acrylonitrile copolymer or similar material. These capsules may be formed as is generally described in U.S. Patent 2,797,201 or U.S. Patent 3,615,972. The capsules may contain an inert gas to maintain their shape. The capsules may be mixed with the elastomeric matrix in any conventional method, such as dispersing them in a dough of the elastomer. The capsules are dispersed by mixing them uniformly throughout the elastomeric matrix for a controlled time period. Because the act of mixing generates a certain amount of heat, it is preferred not to mix longer than 30 minutes. Studies made utilizing an electron microscope, of the preferred embodiment, appear to indicate that a major portion, if not substantially all of the microcapsules used in making the compressible layer are recognizable in the completed printing blanket when utilizing the method of the present invention.

The amount and the size of the specific capsules used may be based on the desired compressibility of the blanket. For example, microcapsules having an average diameter of 40 microns may be used in a ratio representing 50 percent of the elastomeric material used in the compressible layer to produce a compressible layer having 50 percent voids.

Preferably the presence of water is avoided during the incorporation of the microcapsules in the elastomer in order to avoid water vapor blowing during any subsequent heating of the polymer. For this reason, the microcapsules are preferably dried before mixing the elastomer.

Reference is now made to Fig. 2 which is a flow diagram illustrating the steps in one method of preparing the printing blanket of the invention. The reference numbers used in Fig. 2 are the same as those used in Fig. 1 where the same elements are described. As noted in the flow diagram adhesive layer 34 is spread on the upper surface of substrate layer 26; compressible layer 24 is formed by mixing microcapsules and an activator or accelerator with an elastomeric compound for about 30 minutes; and the compound is spread onto the fabric substrate 26. In general, a number of layers of compound are required to obtain the desired thickness of the compressible layer. A layer of adhesive 32 is then spread on the upper surface of the layer 24, and the fabric layer 22 as bonded to the layer 24. The resulting assembly is then subjected to sufficient heat to initially vulcanize layer 24 to a degree sufficient to set the structure of the polymer matrix with the microcapsules fixed in position thereon, said vulcanization being made possible by the addition of an accelerator that promotes the vulcanization at a low temperature. Vulcanization at 66 °C (150°F) for 8 hours is preferred, however, a temperature range of 43° to 77°C (110° to 170°F) for periods of 1 to 12 hours may also be used. Theoretically, ambient temperatures for longer periods of time are also possible. The preferred accelerator referred to in this example is a dithiocarbamate such as the one sold under the name "Butyl-Eight" (trademark), which is available from R.T. Vanderbilt Co. Other examples of accelerators useful in this invention are piperidinium pentamethylene dithiocarbamate (Accel 552 (trademark), available from Dupont Corp), zinc dibenzyl dithiocarbamate (Arazate (trademark), available from Uniroyal), zinc dibutyl dithiocarbamate (Butyl Ziram (trademark), available from Pennwalt). This low temperature vulcanizing step creates a permanent cell structure which is not changed throughout the rest of the manufacturing process.

Of course, those skilled in the art will recognize that, in a rubber product, crosslinking is a continuing process, and that no rubber material is ever completely crosslinked. Therefore, those skilled in the art will recognize that the vulcanization in the low temperature cure of the compressible layer is interrrupted prior to optimum vulcanization, when the elastomeric matrix containing the microcapsules has set up sufficiently to "freeze" the microcapsules in position and still obtain an acceptable product. A thus "partially" vulcanized compressible layer obtains better crosslinking with the base layer and the printing surface.

After curing compressible layer 24, a second substrate fabric layer 27 is laminated to the lower surface of layer 26, by means of adhesive layer 36, on laminating pinch rollers. Following this step, the working surface layer 20, compounded as described above, is applied to the upper surface of reinforcing fabric layer 22, using adhesive layer 30 to achieve a bond. The resultant assembly is then subjected to the final vulcanization process known in the art, at a temperature range of 132° to 160°C (270 °F to 320 °F), and preferably 143° to 149 °C (290 °F to 300 °F), for one-half hour to 16 hours under pressures ranging from atmospheric to 5.2 bars (75 psi). These variables will depend on the exact compounding.

In the final vulcanizing step, paper having a fine finish is disposed in contact with the face of the printing blanket, together with a fine talc prior to placing the blanket in the vulcanizing oven. The paper, contacting the printing blanket surface, assures the smoothness of the printing blanket, since the smoothness of the paper is imparted to the printing blanket For most applications, the finish so provided to the printing blanket will be sufficient for its use, and grinding of the surface will not be required.

It has been found that the step of subjecting the intermediate layer to a partial vulcanization or semi-cure causes the microcapsules to be captured in stationary or set positions in the elastomeric matrix. Since the positions of the microcapsules are set in the matrix, the portions of the voids created by the microcapsules are predetermined by the position of the microcapsules in the matrix. When the assembled blanket undergoes the final vulcanization step, the already set structure of the intermediate layer holds its shape and prevents the agglomeration of voids or the collapse of voids in the layer. This fixed position will not change under final processing of the blanket.

It has been pointed out that the melting temperature of the microcapsules is below the final vulcanizing temperature. Obviously most, if not all of the microcapsules probably melt, but since they are retained within closed cells, they appear to reform, and act as a coating of the walls of the voids. It is also possible that some of the material will partially interact with the elastomer to form a new coating substance. Electron microscope studies have confirmed that the thermoplastic material from which the microcapsules are made remain the voids of the completed printing blanket. Of course, as long as the voids in the compressible layer are formed as described, the presence or absence of the microcapsule material in the voids will not affect the performance of the blanket. Regardless of what happens, the previously fixed void structure remains unchanged.

The exact construction of the blanket may be varied according to its final use. For example, a single fabric substrate layer 26 may be utilized without layer 27, or a third or additional similar layers may be incorporated. It may also be desired to provide additional reinforcing fabric layers similar to layer 22.

Since, for production purposes, it is also possible to prepare a compressible layer for use as an intermediate layer in a printing blanket in one location, and to ship the compressible layer to another location for fabrication of the blanket, the compressible layer, by itself, represents a separate feature of the of the instant invention. The compressible intermediate layer may be prepared by the same method described above in the description of the preparation of the printing blanket, and will have generally the same parameters with regard to dimensions and distribution of voids. In such a case, it would be preferable to apply the compressible layer to at least one fabric substrate layer prior to vulcanizing and shipping. However, it is also possible to utilize a fabric or release paper as the substrate layer and reinforcing layer and strip off the compressible layer for shipping. In that case, these layers will be added later.

Also, it will be recognized by those skilled in the art that it is possible to make a complete blanket construction, including a compressible layer containing microcapsules and a dithiocarbamate accelerator, and subject the construction to a low temperature vulcanizing step in order to fix the microcapsules in the compressible layer as before, before subjecting the blanket construction to final vulcanization.

## Claims

1. A method of making a laminated printing blanket construction comprising the steps of:
providing at least one fabric substrate layer, (26)
forming an intermediate compressible layer (24) of an elastomeric material on said substrate layer (26) said intermediate compressible layer having a substantially uniform thickness and having microcapsules incorporated therein, said microcapsules being substantially uniformly distributed throughout said intermediate compressible layer,
providing a surface layer (20) over said intermediate compressible layer to form a printing blanket constructions, and
finally vulcanizing said construction, at a temperature higher than that at which said microcapsules melt, to cure said layers.
wherein, before a step of finally vulcanizing said construction, the elastomeric material of the intermediate compressible layer is partially vulcanized at a temperature below the melting point of said microcapsules for a time sufficient to cause said elastomeric material to crosslink to a degree sufficient to substantially fix the positions of said microcapsules within said intermediate compressible layer, thereby providing said intermediate layer (24) with substantially uniformly distributed voids of substantially uniform size.

2. A method as claimed in claim 1, **characterized in that** the formation step for said intermediate compressible layer includes the steps of forming said elastomeric material, incorporating said microcapsules therein to form a mixture, spreading said mixture onto said fabric substrate layer, and applying a fabric reinforcing layer (22) over the upper surface of said intermediate compressible layer.

3. A method as claimed in claim 1 or 2, **characterized in that** said construction is finally vulcanized at a temperature of 132° to 160° C.

4. A method as claimed in claim 1,2, or 3 **characterized by** the step of adding an accelerator to said intermediate compressible layer during formation thereof, said accelerator being capable of promoting said partial vulcanization of said intermediate compressible layer at temperatures of between 43° to 77°C in from 1 to 12 hours.

5. A method as claimed in claim 4, **characterized in that** said accelerator is a dithiocarbamate.

6. A method as claimed in any preceding claim, **characterized in that** said microcapsules are formed of a thermoplastic resin.

7. A method as claimed in any preceding claim, **characterized in that** said step of partially vulcanizing said compressible layer below the melting point of said microcapsules is carried out at a temperature of 43 to 77°C.

8. A method as claimed in claim 4, **characterized in that** said accelerator is a dithiocarbamate and said microcapsules are of a copolymer of acrylonitrile and vinylidene chloride.

9. A laminated printing blanket construction (10), made by a method-according to any preceding claim, comprising at least one substrate layer (26), a surface layer (20), and an intermediate compressible layer (24) comprising an elastomeric material having a cellular structure with a plurality of dosed cells forming voids, said intermediate layer (24) having a substantially uniform thickness, said voids being of substantially uniform size and being substantially uniformly distributed throughout said intermediate compressible layer, said voids not being interconnected.

10. A printing blanket as claimed in claim 9, **characterized in that** said voids have a diameter in the range of from 10 to 125 µm.

11. A printing blanket as claimed in claim 9 or 10, **characterized in that** the walls of said voids are coated with a thermoplastic resin.

## Patentansprüche

1. Verfahren zum Herstellen einer laminierten Drucktuchkonstruktion, das folgende Schritte aufweist:
Vorsehen wenigstens einer Textil-Substratschicht (26),
Bilden einer kompressiblen Zwischenschicht (24) aus einem elastischen Polymer auf der Substratschicht (26), wobei die kompressible Zwischenschicht eine im wesentlichen einheitliche Dicke hat und darin eingebaute Mikrokapseln hat, wobei die Mikrokapseln im wesentlichen einheitlich überall in der kompressiblen Zwischenschicht verteilt sind,
Vorsehen einer Oberflächenschicht (20) über der kompressiblen Zwischenschicht, um eine Drucktuchkonstruktion zu bilden, und
Vulkanisieren der Konstruktion bei einer Temperatur, die höher ist als diejenige, bei der die Mikrokapseln schmelzen, um die Schichten auszuhärten,
wobei das elastische Polymer der kompressiblen Zwischenschicht vor einem Schritt des letzten Vulkanisierens der Konstruktion bei einer Temperatur unter dem Schmelzpunkt der Mikrokapseln für eine Zeit teilweise vulkanisiert wird, die ausreicht, um das elastische Polymer zu einem Grad zu vernetzen, der ausreicht, um die Positionen der Mikrokapseln in der kompressiblen Zwischenschicht im wesentlichen zu fixieren, wodurch die Zwischenschicht (24) mit im wesentlichen einheitlich verteilten Luftblasen einer im wesentlichen einheitlichen Größe versehen wird.

2. Verfahren nach Anspruch 1, **dadurch gekennzeichnet, daß** der Schritt zum Bilden der kompressiblen Zwischenschicht die folgenden Schritte enthält: Bilden des elastischen Polymers, Einbauen der Mikrokapseln darin, um eine Mischung zu bilden, Streuen der Mischung auf die Textil-Substratschicht, und Auflegen einer Textil-Verstärkungsschicht (22) über die obere Oberifäche der kompressiblen Zwischenschicht.

3. Verfahren nach Anspruch 1 oder 2, **dadurch gekennzeichnet, daß** die Konstruktion schließlich bei einer Temperatur von 132° bis 160°C vulkanisiert wird.

4. Verfahren nach Anspruch 1, 2 oder 3, **gekennzeichnet durch** den folgenden Schritt: Hinzufügen eines Beschleunigers zu der kompressiblen Zwischenschicht während deren Bildung, wobei der Beschleuniger das teilweise Vulkanisieren der kompressiblen Zwischenschicht bei Temperaturen von zwischen 43° bis 77°C in einer Zeit von ein bis zwölf Stunden fördern kann.

5. Verfahren nach Anspruch 4, **dadurch gekennzeichnet, daß** der Beschleuniger ein Dithiokarbamat ist.

6. Verfahren nach einem der vorangehenden Ansprüche, **dadurch gekennzeichnet, daß** die Mikrokapseln aus thermoplastischem Kunstharz gebildet sind.

7. Verfahren nach einem der vorangehenden Ansprüche, **dadurch gekennzeichnet, daß** der Schritt des teilweisen Vulkanisierens der kompressiblen Schicht unter dem Schmelzpunkt der Mikrokapseln bei einer Temperatur von 43° bis 77°C ausgeführt wird.

8. Verfahren nach Anspruch 4, **dadurch gekennzeichnet, daß** der Beschleuniger ein Dithiokarbamat ist, und die Mikrokapseln aus einem Copolymer von Acrylnitril und Vinyldichlorid sind.

9. Laminierte Drucktuchkonstruktion (10), die durch ein Verfahren nach einem der vorangehenden Ansprüche hergestellt ist, wobei die Konstruktion folgendes aufweist:
wenigstens eine Substratschicht (26), eine Oberflächenschicht (20) und eine kompressible Zwischenschicht (24), die aus einem elastischen Polymer mit einer zellularen Struktur mit einer Vielzahl Luftblasen bildender geschlossener Zellen besteht, wobei die Zwischenschicht (24) eine im wesentlichen einheitliche Dicke hat, die Luftblasen von im wesentlichen einheitlicher Größe sind und im wesentlichen einheitlich überall in der kompressiblen Zwischenschicht verteilt sind, und die Luftblasen nicht miteinander verbunden sind.

10. Drucktuch nach Anspruch 9, **dadurch gekennzeichnet, daß** die Luftblasen einen Durchmesser in dem Bereich von 10 bis 15 µm haben.

11. Drucktuch nach Anspruch 9 oder 10, **dadurch gekennzeichnet, daß** die Wände der Luftblasen mit einem thermoplastischen Kunstharz bedeckt sind.

## Revendications

1. Un procédé de fabrication d'une construction de blanchet d'impression stratifié comprenant les étapes suivantes :
prévoir au moins une couche de substrat en tissu (26),
former une couche compressible intermédiaire (24) en élastomère sur ladite couche de substrat (26), laquelle couche intermédiaire compressible a une épaisseur sensiblement uniforme et comporte intérieurement des microcapsules incorporées, lesdites microcapsules étant réparties de façon sensiblement uniforme dans toute ladite couche intermédiaire compressible,
prévoir une couche de surface (20) sur ladite couche compressible intermédiaire pour former une construction de blanchet d'impression, et
vulcaniser finalement ladite construction, à une température supérieure à celle à laquelle fondent lesdites microcapsules, pour cuire lesdites couches,
dans lequel, avant une étape de vulcanisation finale de ladite construction, l'élastomère de ladite couche compressible intermédiaire est partiellement vulcanisé à une température inférieure au point de fusion desdites microcapsules pendant une durée suffisante pour assurer la réticulation de l'élastomère à un degré suffisant pour fixer pratiquement les positions desdites microcapsules à l'intérieur de ladite couche compressible intermédiaire, afin d'obtenir que ladite couche intermédiaire (24) présente des vides de taille sensiblement uniforme, répartis de façon sensiblement uniforme.

2. Un procédé selon la revendication 1, **caractérisé en ce que** l'étape de formation de ladite couche compressible intermédiaire comprend les phases de réaliser ledit élastomère, d'y incorporer lesdites microcapsules pour former un mélange, d'étendre ledit mélange sur ladite couche de substrat en tissu, et d'appliquer une couche de renfort en tissu (22) sur la surface supérieure de ladite couche compressible intermédiaire.

3. Un procédé selon la revendication 1 ou 2, **caractérisé en ce que** ladite construction est finalement vulcanisée à une température comprise entre 132° C et 160° C.

4. Un procédé selon l'une des revendications 1, 2 ou 3, **caractérisé en ce qu'**il comprend l'étape d'ajouter un accélérateur à ladite couche compressible intermédiaire pendant sa formation, ledit accélérateur étant apte à stimuler ladite vulcanisation partielle de ladite couche compressible de façon qu'elle s'effectue à des températures comprises entre 43° C et 77° C et en un temps de 1 à 12 heures.

5. Un procédé selon la revendication 4, **caractérisé en ce que** ledit accélérateur est un dithiocarbamate.

6. Un procédé selon l'une quelconque des revendications précédentes, **caractérisé en ce que** lesdites microcapsules sont réalisées en une résine thermoplastique.

7. Un procédé selon l'une quelconque des revendications précédentes, **caractérisé en ce que** ladite étape de vulcaniser partiellement ladite couche compressible au-dessous du point de fusion desdites microcapsules est mise en oeuvre à une température comprise entre 43° C et 77° C.

8. Un procédé selon la revendication 4, **caractérisé en ce que** ledit accélérateur est un dithiocarbamate et lesdites microcapsules sont un copolymère de nitrile acrylique et de chlorure de vinylidène.

9. Une construction de blanchet d'impression stratifié (10), comportant au moins une couche de substrat (26), une couche de surface (20), et une couche compressible intermédiaire (24) comprenant un élastomère de structure cellulaire avec une pluralité de cellules fermées formant des vides, ladite couche intermédiaire (24) ayant une épaisseur sensiblement uniforme, lesdits vides étant de taille sensiblement uniforme et étant répartis de façon sensiblement uniforme dans toute ladite couche compressible intermédiaire, lesdites vides ne communiquant pas entre eux.

10. Un blanchet d'impression selon la revendication 9, **caractérisé en ce que** lesdits vides ont un diamètre dans la plage de 10 à 125 µm.

11. Un blanchet d'impression selon la revendication 9 ou 10, **caractérisé en ce que** les parois desdits vides sont revêtues avec une résine thermoplastique.
